# FASCICULE DE BREVET EUROPEEN

(11) **EP 1 044 835 B1**
(45) Date de publication et mention de la délivrance du brevet: **11.05.2005**
(21) Numéro de dépôt: 00107825.2
(22) Date de dépôt: 12.04.2000
(51) Int. Cl.: B60H 1/00

(54) **Dispositif de chauffage et/ou climatisation de véhicule automobile, comprenant un volet mobile**
Heizungs- und/oder Klimaanlage eines Kraftfahrzeugs mit bewegbarer Klappe
Vehicle heating and/or air-conditioning installation with a movable valve

(30) Priorité: 14.04.1999 FR 9904653
(43) Date de publication de la demande: 18.10.2000
(73) Titulaire: VALEO SYSTEMES THERMIQUES, 78320 Le Mesnil Saint-Denis (FR)
(72) Inventeur: Camoni, Jacky, 28400 Nogent-Le-Retrou (FR)

(56) Documents cités:
- EP-A- 0 598 942
- DE-A- 19 757 280
- FR-A- 2 550 848

## Description

L'invention se rapporte à un dispositif de chauffage et/ou climatisation de véhicule automobile.

Elle concerne plus particulièrement un dispositif du type comprenant un boîtier muni d'au moins une entrée d'air, ainsi qu'un volet mobile muni d'un joint d'étanchéité et propre à être déplacé vers une position de fermeture pour obturer ladite entrée d'air.

Dans un dispositif de ce type, le boîtier peut être réalisé, par exemple, sous la forme d'un boîtier d'admission d'air muni de deux entrées servant respectivement à l'admission d'air extérieur et à l'admission d'air recirculé. L'air extérieur est prélevé dans le milieu ambiant, hors de l'habitacle du véhicule, tandis que l'air recirculé est prélevé directement à l'intérieur de l'habitacle.

La conception d'un volet mobile à joint d'étanchéité, tel que défini dans le préambule de la revendication 1, est connue de la demande de brevet français FR-A-2 550 848. De telles conceptions posent différents problèmes de réalisation.

Tout d'abord, il est nécessaire que le joint d'étanchéité empêche tout passage d'air au travers de l'entrée d'air lorsque le volet est en position de fermeture. Cela signifie que, dans cette position, le joint d'étanchéité doit assurer une étanchéité parfaite.

Dans la plupart des dispositifs connus, le joint d'étanchéité est réalisé sous la forme d'une lèvre déformable, habituellement en élastomère, propre à venir en appui étanche contre une surface d'appui entourant l'entrée d'air.

Or, il arrive fréquemment que, dans la position de fermeture, le volet soit soumis à une pression d'air élevée tendant à le déplacer de sa position de fermeture et à décoller le joint d'étanchéité. Il en résulte alors un phénomène de battement qui non seulement occasionne des fuites d'air, mais aussi des bruits divers préjudiciables au confort des occupants du véhicule.

Cette situation se rencontre spécialement dans le cas où le volet vient fermer une entrée d'air extérieur. En effet, ce volet est alors soumis directement à l'impact du flux d'air dû à la vitesse du véhicule. Plus la vitesse du véhicule est importante, plus le volet est soumis à une pression élevée qui tend à provoquer les inconvénients précités.

En outre, lorsque le volet doit être manoeuvré vers cette position de fermeture, alors que le véhicule circule à grande vitesse, la fermeture du volet nécessite un effort important.

L'invention a notamment pour but de surmonter les inconvénients précités.

Elle propose à cet effet un dispositif de chauffage et/ou climatisation du type défini en introduction, dans lequel le joint d'étanchéité comprend un bourrelet d'appui qui s'étend dans une direction généralement perpendiculaire à une face principale du volet et une lèvre déformable qui se raccorde au bourrelet d'appui et qui, dans une configuration de repos, s'étend dans un plan sensiblement parallèle à ladite face principale en présentant un bord libre dirigé vers l'extérieur du volet, de telle sorte que, lorsque le volet se rapproche de la position de fermeture, ladite lèvre se déforme au contact de l'entrée d'air vers une configuration rabattue où elle est enroulée et appliquée contre le bourrelet d'appui.

Ainsi, dans la position de fermeture, la lèvre vient s'appliquer étroitement contre le bourrelet d'appui pour former conjointement un joint massif, mais néanmoins déformable, si bien que la lèvre ne risque pas de battre comme dans les dispositifs de la technique antérieure.

Autrement dit, le bourrelet d'appui et la lèvre constituent un joint épais formant bouchon entre le volet et l'entrée d'air.

Avantageusement, le bourrelet d'appui et la lèvre déformable sont réalisés d'une seule pièce en une matière élastomère.

Toutefois, il pourrait être envisagé que le bourrelet d'appui soit dans un matériau plus dur en étant, par exemple, réalisé monobloc avec le volet proprement dit.

Selon une autre caractéristique de l'invention, le volet est réalisé en une matière plastique, tandis que le bourrelet d'appui est surmoulé sur le volet.

En pareil cas, il est avantageux que le bourrelet d'appui soit surmoulé sur une nervure formée en saillie sur la face principale du volet.

De préférence, le bourrelet d'appui affecte une section en forme de U de manière à recouvrir la nervure.

Selon encore une autre caractéristique de l'invention, le bourrelet d'appui présente une face d'appui conformée propre à favoriser un contact surfacique avec une face interne de la lèvre déformable, lorsque cette dernière est en configuration rabattue.

Selon encore une autre caractéristique de l'invention, le bord libre de la lèvre déformable s'étend au-delà du bord périphérique du volet.

Dans une forme de réalisation préférée de l'invention, le boîtier comprend deux entrées d'air, tandis que le volet est monté pivotant entre deux positions extrêmes pour obturer respectivement ces deux entrées d'air, le volet étant muni de deux joints d'étanchéité raccordés à deux faces principales opposées du volet et propres à coopérer chacun à étanchéité avec l'une des entrées d'air, lorsque le volet est en position d'obturation de ladite entrée d'air.

Un tel boîtier constitue avantageusement un boîtier d'admission d'air muni d'une première entrée d'air pour de l'air extérieur prélevé hors de l'habitacle du véhicule et d'une deuxième entrée d'air pour de l'air recirculé prélevé dans l'habitacle.

Dans la description qui suit, faite à titre d'exemple, on se réfère au dessin annexé, sur lequel :
- la figure 1 est une vue partielle en coupe longitudinale d'un dispositif de chauffage et/ou climatisation de véhicule automobile, comprenant un boîtier d'admission muni de deux entrées d'air susceptibles d'être contrôlées par un volet ;
- la figure 2 est une vue partielle en coupe de l'extrémité du volet et de son joint d'étanchéité, dans une position où la lèvre est en configuration au repos ;
- la figure 3 est une vue analogue à la figure 2 dans laquelle la lèvre est déformée par une première forme de réalisation de l'entrée d'air (du type de celle illustrée sur la figure 1) pour assurer l'étanchéité; et
- la figure 4 est une vue analogue à la figure 3 dans laquelle la lèvre est déformée par une seconde forme de réalisation de l'entrée d'air pour assurer l'étanchéité.

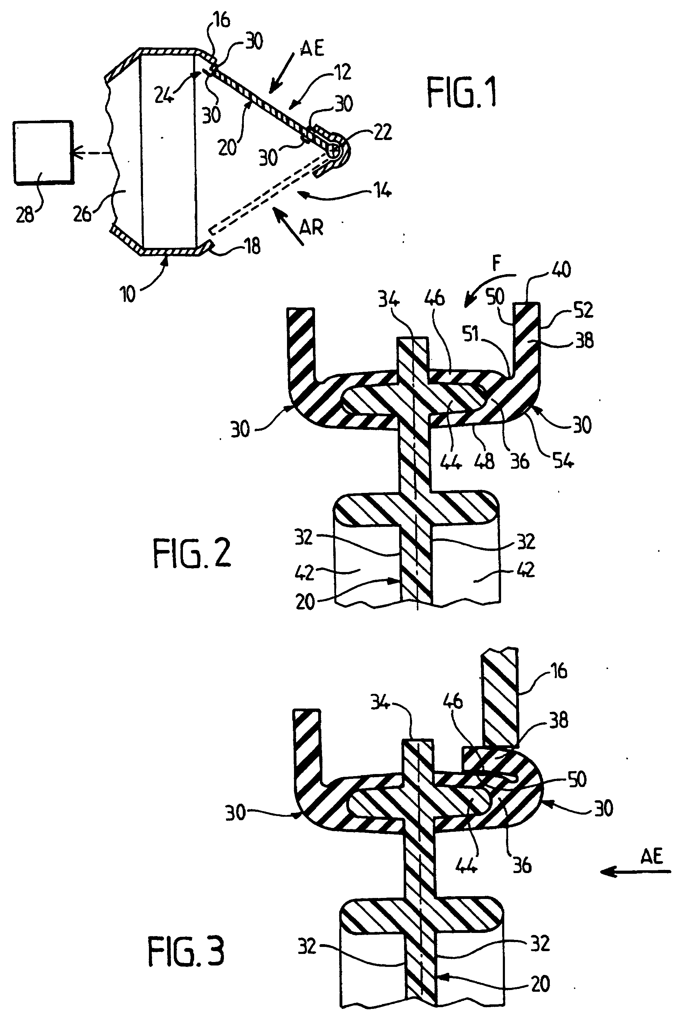

Le dispositif de chauffage et/ou climatisation représenté à la figure 1 comprend un boîtier 10 d'admission d'air muni de deux entrées d'air 12 et 14 formées respectivement sur deux parois 16 et 18 du boîtier espacées angulairement l'une de l'autre. L'entrée 12 sert à l'admission d'un flux d'air extérieur AE prélevé extérieurement à l'habitacle du véhicule automobile, tandis que l'entrée d'air 14 est prévue pour l'admission d'air recirculé AR prélevé à l'intérieur de l'habitacle.

Les entrées 12 et 14 sont contrôlées sélectivement par un volet mobile 20 monté pivotant autour d'un axe 22 entre deux positions extrêmes. Dans une première position extrême, le volet 20 est propre à fermer l'entrée 12 d'air extérieur (volet représenté en trait plein) et dans une deuxième position extrême, le volet est propre à fermer l'entrée 14 d'air recirculé (volet représenté en trait interrompu). Le volet 20 est muni sur au moins une partie de sa périphérie de moyens d'étanchéité 24 propres à empêcher tout passage d'air au travers de l'entrée d'air correspondante, lorsque le volet est en position de fermeture.

Le boîtier 10 comprend en outre une sortie d'air 26 destinée à alimenter un boîtier 28 (représenté schématiquement) logeant, de manière en soi connue, des moyens de traitement d'air et des moyens de distribution d'air.

Lorsque le volet est dans la position "air recirculé", comme représenté en trait plein sur la figure 1, il vient obturer l'entrée d'air 12 pour s'opposer à l'admission d'air extérieur AE.

On comprendra que la pression de cet air extérieur est d'autant plus élevée que le véhicule circule à grande vitesse. Ceci peut conduire à un phénomène de battement du volet et à des fuites d'air au niveau du joint d'étanchéité.

Pour éviter cet inconvénient, le volet est muni de moyens d'étanchéité particuliers qui vont être décrits maintenant en référence à la figure 2.

Les moyens d'étanchéité 24 du volet 20 comprennent deux joints d'étanchéité symétriques 30 raccordés respectivement à deux faces principales opposées 32 du volet, ces joints 30 étant prévus à proximité d'un bord périphérique 34 du volet.

On comprend que l'un des joints 30 est prévu pour assurer l'étanchéité lorsque le volet est dans la position de fermeture de l'entrée d'air extérieur 12 et que l'autre des joints est prévu pour assurer l'étanchéité lorsque le volet est dans la position de fermeture de l'entrée d'air recirculé 14.

Ces deux volets ayant des configurations symétriques, on se contentera maintenant de décrire seulement le joint d'étanchéité 30 situé du côté droit de la figure 2. Dans l'exemple, ce joint est prévu pour coopérer avec l'entrée d'air extérieur 12, lorsque le volet est dans une position d'obturation de ladite entrée d'air.

Chacun des joints 30 comprend essentiellement un bourrelet d'appui 36 qui s'étend dans une direction généralement perpendiculaire à la face principale 32 du volet 20 et une lèvre déformable 38 qui se raccorde au bourrelet d'appui et qui est propre à adopter une configuration de repos (lèvre non déformée), comme montré à la figure 2. Dans cette configuration, la lèvre déformable 38 s'étend dans un plan sensiblement parallèle à la face principale 32 et elle présente un bord libre 40 qui est dirigé vers l'extérieur du volet. Dans la forme de réalisation représentée, ce bord libre 40 s'étend au-delà du bord périphérique 34 du volet 20.

Dans l'exemple de réalisation représenté, le volet 20 est réalisé d'une seule pièce par moulage d'une matière plastique et il comporte par exemple des nervures de renforcement 42. Le joint d'étanchéité 30 est réalisé d'une seule pièce et est raccordé au volet par surmoulage. Pour cela, le joint d'étanchéité est réalisé en une matière élastomère dont le point de fusion ou de ramollissement est supérieur à celui de la matière plastique dont est formé le volet. Lorsque le joint d'étanchéité est surmoulé sur le volet, il se produit une liaison intime entre les matières respectives du joint et du volet, créant ainsi une solidarisation.

Le bourrelet d'appui 36 est surmoulé sur une nervure 44 formée en saillie sur la face principale 32 du volet. Le bourrelet d'appui 36 affecte une section en forme de U de manière à recouvrir complètement ladite nervure.

Le bourrelet 36 présente une face d'appui 46 conformée de manière incurvée et dirigée du côté du bord périphérique du volet, ainsi qu'une face 48 opposée, dirigée du côté de l'axe 22. La lèvre 40 est une lèvre mince d'épaisseur constante qui présente une face interne 50 raccordée à la face 46 du bourrelet par un congé 51 ayant la forme d'un arc de cercle de faible rayon. En outre, la lèvre 38 comporte une face externe 52 raccordée à la face 48 du bourrelet par un arrondi 54 en forme d'arc de cercle, de plus grand rayon que le congé 51.

Dans la configuration au repos, la lèvre 40 s'étend dans une direction généralement perpendiculaire à la direction définie par le bourrelet 36. Lorsque, par suite du pivotement du volet, la lèvre 38 vient en contact de la paroi 16 entourant l'entrée d'air, la lèvre pivote dans le sens de la flèche F (sens anti-horaire sur la figure 2) pour venir se rabattre en direction du bourrelet d'appui 36 pour arriver ainsi à une configuration déformée comme montré à la figure 3.

Dans cette configuration déformée, encore appelée configuration rabattue, la lèvre 38 est enroulée et appliquée contre le bourrelet d'appui 36. Ainsi, la face interne 50 de la lèvre déformable 38 vient en appui surfacique contre la face d'appui 46 du bourrelet 36. Il en résulte que le bourrelet 36 et la lèvre 38 forment conjointement un joint épais, formant une sorte de bouchon, propre à assurer une bonne étanchéité entre la périphérie du volet et le bord de l'ouverture que délimite l'entrée d'air correspondante. On obtient ainsi un joint beaucoup plus massif qu'une simple lèvre déformable qui est donc insensible aux battements et, de plus, est suffisamment déformable élastiquement pour assurer une bonne étanchéité.

Ainsi, même si le volet est exposé à la pression élevée du flux d'air extérieur AE (comme représenté par la flèche de la figure 3) le volet ne risque pas de battre et de créer des fuites d'air et des bruits intempestifs préjudiciables au bon confort des passagers.

On comprendra que, lorsque le volet est amené dans son autre position extrême, c'est l'autre joint 30 qui vient se déformer lorsque le volet vient obturer l'entrée 14 d'air recirculé.

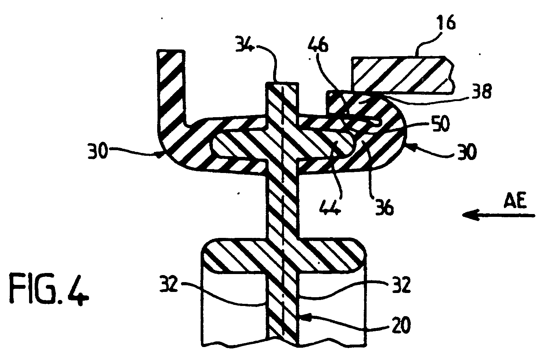

On se réfère maintenant à la figure 4 pour décrire le joint d'étanchéité selon l'invention dans une application à une seconde forme de réalisation d'entrée d'air.

Ici, le joint 30 est, comme sur la figure 3, dans sa configuration déformée, ou configuration rabattue. La lèvre 38 est donc également enroulée et appliquée contre le bourrelet d'appui 36. Cependant, dans cet exemple, la paroi 16 qui entoure l'entrée d'air est dans une position sensiblement perpendiculaire à la position de la face principale 32 du volet 20, lorsque celui-ci obstrue ladite entrée d'air.

Dans cette seconde forme de réalisation de l'entrée d'air 12, la paroi 16 est donc sensiblement parallèle à la lèvre déformable 38 lorsque celle-ci est en position rabattue. Un contact surfacique sensiblement plus important que celui illustré sur la figure 3 est ainsi établi.

Le boîtier 10 pourra comprendre une seconde entrée d'air identique à celle qui vient d'être décrite ci-avant, ou bien identique à celle décrite en référence aux figures 1 à 3.

Bien entendu, l'invention n'est pas limitée à la forme de réalisation décrite précédemment à titre d'exemple et s'étend à d'autres variantes. Ainsi, on comprendra que le volet peut être appliqué à d'autres types de boîtiers, avec une ou plusieurs entrées d'air et pas exclusivement à un boîtier d'admission d'air extérieur et d'air recirculé comme décrit dans l'exemple précédent.

Par ailleurs, la forme du volet et celle du ou des joints d'étanchéité est susceptible de nombreuses variantes, du moment que ce joint comporte essentiellement un bourrelet et une lèvre comme défini précédemment.

Dans l'exemple de réalisation décrit, le bourrelet et la lèvre sont réalisés d'une seule pièce. Dans une variante, il est envisageable de réaliser le bourrelet d'une seule pièce avec le volet et de raccorder la lèvre directement à ce bourrelet, de préférence par surmoulage.

## Revendications

1. Dispositif de chauffage et/ou climatisation de véhicule automobile, comprenant un boîtier (10) muni d'au moins une entrée d'air (12,14), ainsi qu'un volet mobile (20) propre à être déplacé vers une position de fermeture pour obturer ladite entrée d'air, le volet étant muni d'un joint d'étanchéité (30) sur au moins une partie de sa périphérie,
**caractérisé en ce que** le joint d'étanchéité (30) comprend un bourrelet d'appui (36) qui s'étend dans une direction généralement perpendiculaire à une face principale (32) du volet (20) et une lèvre déformable (38) qui se raccorde au bourrelet d'appui et qui, dans une configuration de repos, s'étend dans un plan sensiblement parallèle à ladite face principale (32) en présentant un bord libre (40) dirigé vers l'extérieur du volet, de telle sorte que lorsque le volet se rapproche de la position de fermeture, ladite lèvre (38) se déforme au contact de l'entrée d'air (12 ; 14) vers une configuration rabattue où elle est enroulée et appliquée contre le bourrelet d'appui (36).

2. Dispositif selon la revendication 1, **caractérisé en ce que** le bourrelet d'appui (36) et la lèvre déformable (38) sont réalisés d'une seule pièce en une matière élastomère.

3. Dispositif selon l'une des revendications 1 et 2, **caractérisé en ce que** le volet (20) est réalisé en une matière plastique et **en ce que** le bourrelet d'appui (36) est surmoulé sur le volet.

4. Dispositif selon la revendication 3, **caractérisé en ce que** le bourrelet d'appui (36) est surmoulé sur une nervure (44) formée en saillie sur la face principale (32) du volet (20).

5. Dispositif selon la revendication 4, **caractérisé en ce que** le bourrelet d'appui (36) affecte une section en forme de U de manière à recouvrir la nervure (44).

6. Dispositif selon l'une des revendications 1 à 5, **caractérisé en ce que** le bourrelet d'appui (36) présente une face d'appui conformée (46) propre à favoriser un contact surfacique avec une face interne (48) de la lèvre déformable (38) lorsque cette dernière est en configuration rabattue.

7. Dispositif selon l'une des revendications 1 à 6, **caractérisé en ce que**, dans la configuration au repos, le bord libre (40) de la lèvre déformable (38) s'étend au delà d'un bord périphérique (34) du volet (20).

8. Dispositif selon l'une des revendications 1 à 7, **caractérisé en ce que** le boîtier (10) comprend deux entrées d'air (12 ; 14), **en ce que** volet (20) est monté pivotant entre deux positions extrêmes pour obturer respectivement ces deux entrées d'air (12 ; 14), et **en ce que** le volet est muni de deux joints d'étanchéité (30) raccordés à deux faces principales opposées (32) du volet et propres à coopérer chacun à étanchéité avec l'une des entrées d'air lorsque le volet est en position d'obturation de ladite entrée d'air.

9. Dispositif selon la revendication 8, **caractérisé en ce que** le boîtier (10) est un boîtier d'admission d'air muni d'une première entrée d'air (12) pour de l'air extérieur (AE) prélevé hors de l'habitacle du véhicule et d'une deuxième entrée d'air (14) pour de l'air recirculé (AR) prélevé dans l'habitacle.

## Patentansprüche

1. Heiz- und/oder Klimatisierungsvorrichtung für ein Kraftfahrzeug mit einem Gehäuse (10), das mit mindestens einem Lufteinlass (12, 14) sowie einer beweglichen Klappe (20) versehen ist, die in eine Schließstellung bewegt werden kann, um den Lufteinlass zu verschließen, wobei die Klappe an mindestens einem Teil ihres Umfangs mit einer Dichtung (30) versehen ist,
**dadurch gekennzeichnet, dass** die Dichtung (30) einen Stützwulst (36), der sich in einer allgemein senkrecht zur Hauptfläche (32) der Klappe (20) verlaufenden Richtung erstreckt, und eine verformbare Lippe (38) umfasst, die mit dem Stützwulst verbunden ist und sich in einer Ruhekonfiguration in einer im Wesentlichen parallel zur Hauptfläche (32) verlaufenden Ebene erstreckt, wobei sie einen nach außen der Klappe hin gerichteten freien Rand (40) aufweist, so dass sich die Lippe (38), wenn sich die Klappe der Schließstellung annähert, bei Kontakt mit dem Lufteinlass (12, 14) zu einer umgebogenen Konfiguration verformt, in der sie aufgerollt ist und gegen den Stützwulst (36) gedrückt wird.

2. Vorrichtung nach Anspruch 1, **dadurch gekennzeichnet, dass** der Stützwulst (36) und die verformbare Lippe (38) aus einem elastomeren Material einstückig hergestellt sind.

3. Vorrichtung nach Anspruch 1 oder 2, **dadurch gekennzeichnet, dass** die Klappe (20) aus einem Kunststoff hergestellt ist und der Stützwulst (36) auf der Klappe aufgespritzt ist.

4. Vorrichtung nach Anspruch 3, **dadurch gekennzeichnet, dass** der Stützwulst (36) auf einer von der Hauptfläche (32) der Klappe (20) vorragenden Rippe (44) aufgespritzt ist.

5. Vorrichtung nach Anspruch 4, **dadurch gekennzeichnet, dass** der Stützwulst (36) einen U-förmigen Querschnitt aufweist, um die Rippe (44) zu überdecken.

6. Vorrichtung nach einem der Ansprüche 1 bis 5, **dadurch gekennzeichnet, dass** der Stützwulst (36) eine angepasste Stützfläche (46) aufweist, die einen Oberflächenkontakt mit einer Innenfläche (48) der verformbaren Lippe (38) begünstigt, wenn sich diese Letztere in umgeklappter Konfiguration befindet.

7. Vorrichtung nach einem der Ansprüche 1 bis 6, **dadurch gekennzeichnet, dass** sich der freie Rand (40) der verformbaren Lippe (38) in Ruhekonfiguration über einen Umfangsrand (34) der Klappe (20) hinaus erstreckt.

8. Vorrichtung nach einem der Ansprüche 1 bis 7, **dadurch gekennzeichnet, dass** das Gehäuse (10) zwei Lufteinlässe (12; 14) aufweist, dass die Klappe (20) zwischen zwei Endstellungen schwenkbar angebracht ist, um diese beiden Lufteinlässe (12; 14) jeweils zu verschließen, und dass die Klappe mit zwei Dichtungen (30) versehen ist, die mit zwei einander gegenüberliegenden Hauptflächen (32) der Klappe verbunden sind und jeweils mit einem der Lufteinlässe abdichtend zusammenwirken können, wenn sich die Klappe in der Stellung zum Verschließen des Lufteinlasses befindet.

9. Vorrichtung nach Anspruch 8, **dadurch gekennzeichnet, dass** es sich bei dem Gehäuse (10) um ein Lufteintrittsgehäuse handelt, das mit einem ersten Lufteinlass (12) für außerhalb der Fahrgastzelle des Fahrzeugs entnommene Außenluft (AE) und einem zweiten Lufteinlass (14) für aus der Fahrgastzelle entnommene rezirkulierte Luft (AR) versehen ist.

## Claims

1. Vehicle heating and/or air-conditioning installation, comprising a case (10) provided with at least one air inlet (12, 14) and also a movable valve (20) capable of being displaced towards a closed position in order to close off said air inlet, the valve being provided with a seal (30) over at least a part of its periphery, **characterized in that** the seal (30) comprises a bearing bead (36) extending in a direction that is generally perpendicular to a principal face (32) of the valve (20) and a deformable lip (38) that is connected to the bearing bead and, in a rest configuration, extends in a plane that is substantially parallel to said principal face (32), having a free edge (40) facing the outside of the valve such that when the valve approaches the closed position said lip (38) deforms upon contact with the air inlet (12; 14) towards a folded configuration in which it is rolled up and applied against the bearing bead (36).

2. Device according to Claim 1, **characterized in that** the bearing bead (36) and the deformable lip (38) are produced as a single piece from an elastomeric material.

3. Device according to one of Claims 1 and 2, **characterized in that** the valve (20) is produced from a plastic material and **in that** the bearing bead (36) is overmoulded onto the valve.

4. Device according to Claim 3, **characterized in that** the bearing bead (36) is overmoulded onto a rib (44) formed as a projection on the principal face (32) of the valve (20).

5. Device according to Claim 4, **characterized in that** the bearing bead (36) has a U-shaped section in order to cover the rib (44).

6. Device according to one of Claims 1 to 5, **characterized in that** the bearing bead (36) has a shaped bearing face (46) capable of promoting surface contact with an inner face (48) of the deformable lip (38) when the latter is in the folded configuration.

7. Device according to one of Claims 1 to 6, **characterized in that** in the rest configuration the free edge (40) of the deformable lip (38) extends beyond a peripheral edge (34) of the valve (20).

8. Device according to one of Claims 1 to 7, **characterized in that** the case (10) comprises two air inlets (12; 14), **in that** the valve (20) is mounted so as to pivot between two extreme positions in order to close off these two air inlets (12; 14), respectively, and **in that** the valve is provided with two seals (30) connected to two opposite principal faces (32) of the valve and capable of each interacting in a leaktight manner with one of the air inlets when the valve is in the position in which it closes off said air inlet.

9. Device according to Claim 8, **characterized in that** the case (10) is an air-inlet case provided with a first air inlet (12) for exterior air (AE) taken from outside the vehicle passenger compartment and with a second air inlet (14) for recirculated air (AR) taken from inside the passenger compartment.
